# EUROPÄISCHE PATENTSCHRIFT

(11) **EP 0 950 938 B1**
(45) Veröffentlichungstag und Bekanntmachung des Hinweises auf die Patenterteilung: **12.01.2005**
(21) Anmeldenummer: 99107641.5
(22) Anmeldetag: 16.04.1999
(51) Int. Cl.: G05B 19/418

(54) **Verfahren und Vorrichtung zur Qualitätsüberwachung**
Method and device for quality control
Méthode et dispositif pour le contrôle de qualité

(30) Priorität: 16.04.1998 DE 29806822 U
(43) Veröffentlichungstag der Anmeldung: 20.10.1999
(73) Patentinhaber: KUKA Schweissanlagen GmbH, 86165 Augsburg (DE)
(72) Erfinder: Rippl, Peter, 86163 Augsburg (DE)
(74) Vertreter: Ernicke, Hans-Dieter, Dipl.-Ing.

(56) Entgegenhaltungen:
- US-A- 4 224 501
- US-A- 5 550 744

## Beschreibung

Die Erfindung betrifft ein Verfahren und eine Vorrichtung zur Qualitätsüberwachung bei der Bearbeitung von Werkstücken mit den Merkmalen im Oberbegriff des Verfahrens- und Vorrichtungshauptanspruchs.

Eine Bearbeitungseinrichtung ist aus der EP-0 708 937 B1 bekannt. Sie besteht aus ein oder mehreren Manipulatoren mit jeweils mindestens einem Werkzeug und einer Steuerung für den oder die Manipulatoren und für die Applikation. Der jeweilige Manipulator führt sein Werkzeug nach einem vorgegebenen Applikationsprogramm entlang einer vorgegebenen Bahn. Bei derartigen automatisierten Bearbeitungs-Prozessen besteht das Problem der Qualitätsüberwachung. Hierzu ist es bekannt, prozessintern die Applikationsparameter in fest vorgegebenen Zeitfenstern anhand von extern vorgegebenen Soll-Werten mit Ober- und Untergrenzen zu überwachen. Diese Vorgabewerte sind aufwendig zu erstellen, wobei der Aufwand jedes mal neu betrieben werden muss, wenn sich an der Applikation oder der Bahn etwas ändert. Außerdem haben diese an externen Vorgaben orientierten Überwachungen nur eine begrenzte Aussagekraft zur tatsächlichen Qualität des Werkstückes bzw. Bearbeitungs-Prozesses.

Bei solchen Bearbeitungseinrichtungen ist es bekannt, die Bewegungen des Roboters und auch das Werkzeug zu überwachen. Die Literaturstelle WECK, Manfred: "Sichere Bewegungsüberwachung bei Industrierobotern", in: VDI-Z, 132,1990, Nr. 11, Seite 87 - 91 befasst sich mit einer solchen Bewegungsüberwachung, die zum einen der Prozessüberwachung dient und zum anderen der Risikominimierung, z.B. durch Kollisions- oder Unfallüberwachung.

Etwas ähnliches ist auch aus der GB-A-2 285 700 bekannt. Hier wird ebenfalls ein Roboter überwacht, um eventuelle durch Erwärmung, Verschleiß oder andere Gründe hervorgerufene Maschinenänderungen festzustellen. In die gleiche Richtung zielt auch die DE-C-35 00 806 mit der Roboterüberwachung. Eine Werkzeugüberwachung ist aus der EP-A-0 413 509 bekannt. Andere Roboterüberwachungen der genannten Art zeigen noch die DE-C 32 01 852 und die EP-A 0 263 181. Mit all diesen Einrichtungen und Überwachungsverfahren lässt sich nur die Hardware und der Prozess, nicht aber die Qualität der bearbeiteten Bauteile überwachen und kontrollieren.

Aus der US-A 5,339,249 ist eine Qualitätsüberwachung von bearbeiteten Bauteilen bekannt, bei der die z.B. spanabhebend bearbeiteten Bauteile vermessen werden. Wenn die Maße außerhalb der Toleranz liegen, wird die Bearbeitungsvorrichtung entsprechend nachgestellt, indem z.B. die Offset-Werte von Spindelschlitten etc. nachgeführt werden. Die Messung der Bauteile kann vollautomatisch mit einer elektronischen Messeinrichtung erfolgen, wobei die Messdaten auf direktem Wege der Maschinensteuerung zugeleitet werden, wobei aus einem Vergleich mit den vorgegebenen Bauteilabmessungen die benötigte Korrektur für die Offset-Werte errechnet und eingestellt wird.

Es ist daher Aufgabe der vorliegenden Erfindung, eine bessere Qualitätsüberwachung aufzuzeigen.

Die Erfindung löst diese Aufgabe mit den Merkmalen im Hauptanspruch.
Die erfindungsgemäße Qualitätsüberwachung ist einfacher, genauer und betriebssicherer als beim Stand der Technik.

Sie ist besonders wirtschaftlich und lässt sich in Bearbeitungsvorrichtungen von vornherein integrieren oder auch kostengünstig nachrüsten.

Bei der erfindungsgemäßen Qualitätsüberwachung werden die tatsächlich aufgetretenen Applikations-Parameter während des Bearbeitungs-Prozesses entlang der Bahn in Abhängigkeit von Weg oder von Wag und Zeit aufgenommen und mit den Ist-Parametern einer vorherigen Kalibrierung mit gleicher Bahn verglichen. Die Sollwerte für den Vergleich kommen dadurch nicht aus externen Vorgaben, sondern aus einer Kalibrierung, bei der das Werkstück nach der Probebearbeitung einer Qualitätsprüfung unterzogen und für gut befunden wurde. Die bei dieser Kalibrierung aufgenommenen Ist-Werte der Applikations-Parameter berücksichtigen alle prozessinternen Eventualitäten und Einflüsse, die nicht qualitätsrelevant sind und daher vernachlässigt oder ausgeblendet werden können.

Von besonderem Vorteil ist der Umstand, daß die Parameter-Aufnahme während der Kalibrierung und während des normalen Applikationsablaufes abhängig von Weg oder von Weg und Zeit und somit jederzeit reproduzierbar ist. Durch die Zuordnung der Prozessdaten zu Weg oder zu Weg und Zeit und einer Speicherung der gekoppelten Daten kann eine eindeutige Aussage über die Produktqualität getroffen werden, was auch für das Problem der Produkthaftung von besonderem Vorteil ist. Außerdem kann der Abfragetakt prozessbezogen sein und läßt sich frei festlegen. Die Abfrage- und Vergleichshäufigkeit kann an besonders kritischen Bereichen größer als an qualitätsneutralen Bereichen sein.

Von besonderem Vorteil ist die Integration der Qualitätsüberwachung in eine vollautomatisierte Applikation. Wenn sich gewisse Applikationsparameter ändern, indem z.B. mit einer größeren Geschwindigkeit geschweißt werden soll, wird kurzerhand eine neue Kalibrierung gefahren, anhand derer die Vorgabewerte für die spätere Qualitätsüberwachung der Produktionsprozesse gewonnen werden. Dies geht sehr schnell und zielgenau. Außerdem können anhand mehrerer Kalibriervorgänge Mittelwertbildungen und Varianten in den zulässigen Schwankungsbereichen ermittelt und als Vorgabewerte gespeichert werden. Vorteilhafterweise hat die Überwachungseinrichtung hierfür ein eigenes Kalibrierprogramm mit Speicherung.

Anhand der Qualitätsüberwachung kann mit der Überwachungseinrichtung auch eine Regelung der Applikationen erfolgen, wobei eine entsprechende Koppelung zwischen Applikations-Steuerung und Manipulator-Steuerung besteht.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Bearbeitungseinrichtung mit einem Manipulator und einer Überwachungseinrichtung und
- Figur 2 und 3:: verschiedene Prozeßdiagramme.

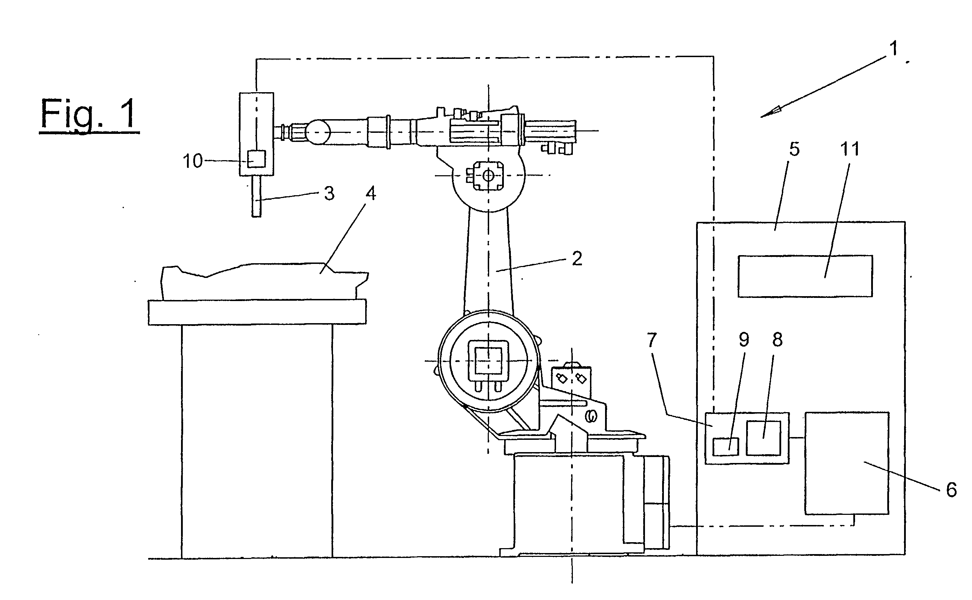

Figur 1 zeigt in einer schematischen Darstellung eine Bearbeitungseinrichtung (1), die beliebige Applikationen durchführen kann. Vorzugsweise handelt es sich hierbei um Fügeapplikationen, z.B. Schweißen, Clinchen oder dergleichen. Es kann sich auch um Auftragsapplikationen, wie Kleben oder Beschichten oder auch um Trennapplikationen handeln.

Je nach gewünschter Applikation ist der Manipulator (2) mit ein oder mehreren entsprechenden Werkzeugen (3) ausgerüstet und bearbeitet ein oder mehrere Werkstücke (4). Der Manipulator (2) ist vorzugsweise als mehrachsiger Industrieroboter ausgebildet, kann ansonsten aber jede beliebige ein- oder mehrachsige Ausbildung haben.

Die Bearbeitungseinrichtung (1) besitzt eine Steuerung (5), die vorzugsweise eine Applikationssteuerung (7) und eine Manipulatorsteuerung (6) beinhaltet. Diese Steuerungen (6,7) können auch getrennt angeordnet und lediglich signal- und leitungsmäßig verbunden sein. In der bevorzugten Ausführungsform sind diese Steuerungen (6,7) zu einer gemeinsamen Steuerung (5) vereinigt und gemeinsam in einem Schaltschrank untergebracht. Die Steuerung (5) besitzt außerdem eine Anzeige (11).

Die Bearbeitungseinrichtung (1) weist für die Qualitätskontrolle des Applikations-Prozesses und der bearbeiteten Werkstück (4) eine Überwachungseinrichtung (9) auf, die vorzugsweise ein oder mehrere Prozessoren aufweist und in die Steuerung (5) integriert ist. Sie kann alternativ auch der Manipulatorsteuerung (6) und/oder der Applikationssteuerung (7) zugeordnet sein. Die Überwachungseinrichtung (9) kann von vorneherein in die Bearbeitungseinrichtung (1) integriert oder dieser zugeordnet sein. Sie läßt sich aber auch nachrüsten.

Die Überwachungseinrichtung (9) ist mit ein oder mehreren Meßeinrichtungen (10) verbunden, die beispielsweise am Werkzeug (3) oder einer sonstigen beliebig geeigneten Stelle angeordnet sind. Die Meßeinrichtungen (10) nehmen die prozeßrelevanten Applikations-Parameter (15) als Ist-Werte auf. Dies können z.B. der Schweißstrom, die Schweißspannung, die Drahtvorschubgeschwindigkeit oder dergleichen andere beliebig geeignete Parameter sein. Diese Applikations-Parameter (15) werden an die Überwachungseinrichtung (9) übermittelt und dort verarbeitet und gegebenenfalls auch gespeichert.

Die Überwachungseinrichtung (9) beinhaltet ein oder mehrere Speichereinrichtungen (8), die auch Programmdaten beinhalten können. Die Überwachungseinrichtung (9) besitzt auch eine Kalibrierschaltung, die hardwaremäßig oder softwaremäßig realisiert sein kann. Sie wird auf Knopfdruck vom Bediener oder ferngesteuert gestartet und führt eine nachfolgend nähere erläuterte Kalibrierung durch. Außerdem besitzt die rechnergestützte Überwachungseinrichtung (9) eine hardware- oder softwaremäßig realisierte Vergleichseinrichtung, die außerdem vorzugsweise eine Intergiereinheit und/oder eine Filtereinheit zur Bearbeitung der Applikations-Parameter (15) aufweist.

Die Überwachungseinrichtung (9) ist mit der Manipulatorsteuerung (6) verbunden und nimmt von dieser bahnrelevante Werte wie Weg oder Weg und Zeit auf. Bei der Applikation führt der Manipulator (2) sein Werkzeug (3) entlang einer vorgegebenen und programmierten Bahn nach einem vorgegebenen Applikationsprogramm. Durch die Kopplung mit der Manipulatorsteuerung (6) können die aufgenommenen Applikations-Parameter (15) bahnrelevanten Werten wie Weg oder Weg und Zeit direkt zugeordnet und gemeinsam gespeichert werden. Durch diese Zuordnung ist auch eine Vergleichsfähigkeit der Applikations-Parameter aus mehreren gleichartigen Vorgängen gewährleistet.

Bei der direkten Qualitätsüberwachung werden die qualitätsrelevanten Größen gemessen und stichprobenartig oder an jedem Bauteil oder Werkstück (4) kontrolliert. Mechanisch-technologische Gütewerte von Fügeverbindungen lassen sich entweder zerstörungsfrei z.B. durch Ultraschall- oder Röntgenprüfung, zum Teil auch durch Mikro- und Kleinlasthärteprüfungen oder nur durch zerstörende Prüfungen, wie Dauerfestigkeit, Zug-, Biegeund Torsionsversuch, Härtemessung etc. ermitteln. Bei den indirekten Qualitätssicherungssystemen werden Prozeßparameter zur Qualitätskontrolle herangezogen, die möglichst gut das Überwachen der Qualitätsmerkmale beinhalten und wiedergeben können. Dies können sowohl Einstell- und Vorgabegrößen, z.B. Kennlinieneinstellungen oder Drahtgeschwindigkeit, aber auch daraus resultierende, direkt meßbare physikalische Größen, wie Strom oder Spannung, und desweiteren auch durch Verknüpfung abgeleitete Größen, wie Leistung oder Widerstand, sein. Bezüglich der erforderlichen Informationsdichte sind zur Prozeßbeschreibung je nach Aufgabenstellung Momentanwertverläufe, Mittel- oder Effektivwert, bzw. gefilterte Meßwertverläufe (Hoch-,Tief- oder Bandpaß) zu bewerten.

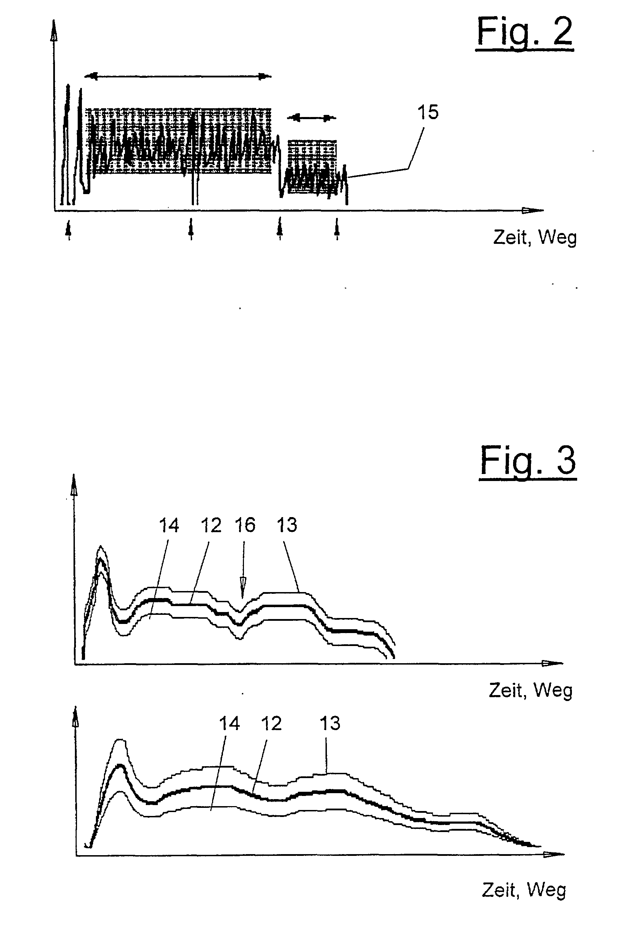

Beim Schutzgasschweißen sind z.B. die Größen Schweißstrom und Schweißspannung qualitätsrelevante Applikations-Parameter (15), die in Ober- und Untergrenze überwacht ein überprüfungsfähiges Kriterium für ausreichende Schweißqualität darstellen. Die Momentanwertverläufe, wie sie z.B. in Figur 2 dargestellt sind, weisen jedoch besonders im Kurzlichtbogen- und Pulslichtbogenbereich Amplitudenwerte auf, die mittels fester Fenster sich nicht sinnvoll überwachen lassen. Daher kann nur über angepaßte Integrationszeiten der Mittel- oder Effektivwert bzw. der über Filter geglättete Meßwertverlauf in einem Fenster mit Ober- und Untergrenze überwacht werden. Figur 2 zeigt hierfür ein Beispiel. Bei festen Fenstern sind dabei jedoch einige Randbedingungen schwer zu handhaben. Zum einen ist der Zündvorgang nicht immer genau reproduzierbar, so daß er meist ausgeblendet werden muß. Bei kurzen Prozeßzeiten (z.B. Lochschweißung) ist kaum eine sinnvolle Überwachungsmöglichkeit vorhanden, da die Ausblendzeit extrem in die Prozeßzeit eingeht. Kurzzeitige Lichtbogenaussetzer überschreiten ferner die festgelegten Ober- und Untergrenzen, ohne daß dies in der Schweißnahtqualität nachgewiesen werden kann. Somit müssen die Überschreitungen in gewissen Grenzen aufgabenabhängig und zeitbewertet ausgeblendet werden. Zudem müssen Parameterumschaltvorgänge bis um Erreichen des stabilen neuen Meßwertes ausgeblendet werden. In der Optimierungsphase und bei Parameteränderungen sind bei einer konventionellen Qualitätsüberwachung immer wieder neue Fenster anzupassen.

Die Erfindung sieht demgegenüber die Orientierung der Qualitätsüberwachung an einer Kalibrier-Applikation vor. Für das gezeigte Ausführungsbeispiel einer Schweißung bedeutet dies, daß man anhand des vorerwähnten Kalibrierprogrammes mit der Überwachungseinrichtung (9) ein oder mehrere Probeschweißungen vornimmt und dabei die auftretenden relevanten Applikations-Parameter (15) als

Ist-Werte und Kalibriervorgaben aufnimmt und speichert. Bei den Probeschweißungen kann mit veränderlichen Prozeßeinstellungen gearbeitet werden, um die Ergebnisse zu optimieren. Bei der Kalibrierung werden die Applikations-Parameter (15) vorzugsweise über den gesamten Prozeß aufgenommen und in der vorerwähnten Weise in Kopplung mit dem Weg oder mit Weg und Zeit ereignisbezogen und mit Zuordnung zu den jeweiligen Prozeßeinstellungen gespeichert. Die Applikations-Parameter (15) werden dabei mit festen Integrationszeiten integriert oder entsprechend gefiltert

Figur 3 zeigt zwei solche integrierte Meßwertverläufe, die sich als Sollwert-Kurven (12) mit Parameterabsenkung und zwei unterschiedlichen Integrationszeiten darstellen. Zündvorgänge, kurzeitige Über- und Unterschreitungen, Umschaltvorgänge und Abschaltbereiche sind hierbei nicht ausgeblendet.

Die Werkstücke (4) aus den Kalibriervorgängen bzw. Probebearbeitungen werden anschließend einer Qualitätsprüfung in geeigneter Weise unterzogen. Wenn sie für gut befunden werden, können die zugehörigen Istwert-Kurven der Applikations-Parameter (15) als Sollwert, insbesondere als Sollwert-Kurve (12), mit geeigneten oberen und unteren Schwellwerten (13,14) für die Qualitätsüberwachung bei der Serienbearbeitung herangezogen werden. Hierbei können aus mehreren für gut befundenen Kalibriervorgängen auch Mittelwerte für den oder die Sollwert(e) (12) ermittelt werden. Die Serienbearbeitung wird mit den Prozeßeinstellungen der für gut befundenen Kalibrierung durchgeführt.

Die in Figur 2 und 3 gezeigten Sollwert-Kurven (12) sind nun die Vorgabe für die Qualitätsüberwachung. Hierbei werden Parameterschwankungen, die nicht qualitätsrelevant sind, einbezogen und führen nicht zu Abschaltungen oder Fehlermeldungen. In den Diagrammen von Figur 3 ist z.B. eine Parameterabsenkung als Unstetigkeit (16) zu finden. Dies kann z.B. eine Abfall des Schweißstroms durch Unzulänglichkeiten in der Bahnprogrammierung des Roboters (2) sein. Der Grund kann auch in einer Veränderung des Schweißbades durch besondere Wärmeableitungen, Änderungen der Nahtgeometrie etc. sein. Diese Abweichungen werden in der Qualitätsüberwachung als.nicht fehlerrelevant berücksichtigt.

Bei der anschließenden Serienbearbeitung bzw. Serien-Applikation werden ebenfalls die Applikationsparameter (15) bahnbezogen im Abhängigkeit von Weg oder von Weg und Zeit aufgenommen und mit den auf die gleiche Bahn bezogenen Sollwerten (12) verglichen. Hierbei kann eine mitlaufende Glättung durch Integration mit gleicher Integrationszeit wie bei der Kalibrierung bzw. beim Master-Teil oder gleicher Filterung stattfinden. Die aufgenommenen Applikations-Parameter (15) können online während des Prozesses mit den Sollwerten (12) verglichen werden. Es ist aber auch möglich, die aufgenommenen Werte zu speichern und den Vergleich anschließend durchzuführen.

Die zulässigen oberen und unteren Schwellwerte (13,14) können auf unterschiedliche Weise ermittelt werden. Im oberen Diagramm von Figur 3 ist z.B. eine Überwachung bei mitlaufendem Fenster mit einer konstanten Schwellwertbreite dargestellt. Das untere Diagramm zeigt eine Überwachung bei mitlaufendem Fenster mit variablen Schwellwerten (13,14), wobei sich die zulässige Schwellwertbreite prozentual am aktuellen Parameterwert orientiert.

Die mit entsprechender Rechner- und Programmkapazität ausgestattete Überwachungseinrichtung (9) erlaubt auch eine intelligente Verarbeitung und Auswertung. Zum einen kann der Abfragetakt variabel und intelligent an die Applikation angepaßt sein. An kritischen Bereichen, wo die Sollwert-Kurve (12) steiler ansteigt, kann der Abfragetakt höher sein als an anderen, weniger kritischen Bereichen mit weitgehend konstanter Parameterführung. Diese Abfrageveränderung kann die Überwachungseinrichtung (9) unter Umständen selbsttätig anhand einer Auswertung der Sollwert-Kurve (12) vornehmen.

In der bevorzugten Ausführung erfolgt der Vergleich wegbezogen, wobei etwaige Stillstände des Roboters durch Abschaltungen öder aufgrund anderer Einflüsse gegebenenfalls kompensiert werden. Außerdem können derartige Abweichungen vom normalen Prozeß mit den Prozeßdaten abgespeichert werden.

Eine intelligente Überwachungseinrichtung (9) erlaubt es, daß nur qualitätsrelevante oder fehlerwahrscheinliche Daten gespeichert werden. Dies erlaubt eine Verkleinerung des Speichervölumens. Außerdem können statt der Applikations-Parameter (15) auch nur die etwaigen Abweichungen gegenüber der Sollwert-Kurve (12) gespeichert werden. Hierbei werden die Prozeßdaten jeweils bahnbezogen in Abhängigkeit von Weg oder von Weg und Zeit abgespeichert und sind dadurch hinterher immer wieder am Werkstück (4) reproduzierbar.

Die Überwachungseinrichtung (9) gibt die aufgenommenen Applikations-Parameter (15) bzw. die Vergleichsergebnisse an eine eigene oder zur Steuerung (5) gehörige Anzeige (11) aus. Außerdem können die Daten auf andere Weise extern übermittelt werden, indem sie mitlaufend in einer Datei protokolliert und auf einem geeigneten Datenträger oder per Datenfernübertragung ausgegeben werden.

Die Überwachungseinrichtung (9) erlaubt auch eine Regelung der Applikations-Prozesse. Zu diesem Zweck kann in die Überwachungseinrichtung (9) eine entsprechende Regeleinrichtung integriert sein, was hardware- oder softwaremäßig realisiert werden kann. Außerdem kann die Regeleinrichtung extern und an anderer Stelle angeordnet sein. Schwankungen der Applikations-Parameter (15) werden von der Überwachungseinrichtung (9) an die Regeleinrichtung gemeldet oder selbst in ähnlicher Weise wie bei der Qualitätsüberwachung anhand von Schwellwertgrenzen interpretiert und lösen entsprechende Vorgabeänderungen in der Manipulatorsteuerung (6) und/oder der Applikationssteuerung (7) aus.

### BEZUGSZEICHENLISTE

- 1: Bearbeitungseinrichtung, Applikation
- 2: Manipulator, Industrieroboter
- 3: Werkzeug
- 4: Werkstück
- 5: Steuerung
- 6: Manipulatorsteuerung
- 7: Applikationssteuerung
- 8: Speichereinrichtung
- 9: Überwachungseinrichtung
- 10: Meßeinrichtung
- 11: Anzeige
- 12: Sollwert
- 13: Schwellwert oben
- 14: Schwellwert unten
- 15: Applikations-Parameter, Schweißstrom
- 16: Unstetigkeit

## Patentansprüche

1. Verfahren zur Qualitätsüberwachung bei der Bearbeitung von Werkstücken (4), wobei die Bearbeitung von einem Manipulator (2) mit mindestens einem Werkzeug (3) und einer Steuerung (5,6,7) für den Manipulator und die Applikation durchgeführt wird und der Manipulator (2) das Werkzeug (3) nach einem vorgegebenen Applikationsprogramm entlang einer vorgegebenen Bahn führt, **dadurch gekennzeichnet, dass** in ein oder mehreren Kalibriervorgängen mindestens ein Werkstück (4) probeweise bearbeitet wird, wobei die Ist-Werte von ein oder mehreren Applikations-Parametern (15) mit einer Überwachungseinrichtung (9) in Abhängigkeit von Weg oder von Weg und Zeit aufgenommen und gespeichert werden, wonach die Qualität des oder der bearbeiteten Werkstücke (4) geprüft wird und aus den Ist-Werten der für gut befundenen Kalibrier-Werkstücke (4) von Weg oder von Weg und Zeit abhängige Soll-Werte (12,13,14) ermittelt werden, mit denen im anschließenden Serienbetrieb die Prozeß- und Produktqualität durch Vergleich der im Serienbetrieb aufgenommenen Ist-Werte mit den Soll-Werten (12,13,14) überwacht wird.

2. Verfahren nach Anspruch 1, **dadurch gekennzeichnet, dass** die Ist-Werte und die Soll-Werte (12,13,14) als von Weg oder von Weg und Zeit abhängige Momentanwertverläufe aufgenommen und gespeichert werden.

3. Verfahren nach Anspruch 1 oder 2, **dadurch gekennzeichnet, dass** die im Kalibrierund im Serienbetrieb aufgenommenen Applikations-Parameter (15) mit festen Integrationszeiten integriert oder entsprechend gefiltert werden.

4. Verfahren nach einem der Ansprüche 1 bis 3, **dadurch gekennzeichnet, dass** der Abfragetakt bei der Qualitätsüberwachung variabel ist und an die Applikation, insbesondere in kritischen Bereichen, angepaßt wird.

5. Verfahren nach einem der Ansprüche 1 bis 4, **dadurch gekennzeichnet, dass** der Ist/Soll-Wertvergleich und die Qualitätsüberwachung online durchgeführt werden.

6. Verfahren nach einem der Ansprüche 1 bis 5, **dadurch gekennzeichnet, dass** die Kalibrierung mit einer Kalibrierschaltung in der Überwachungseinrichtung (9) automatisch durchgeführt wird.

7. Vorrichtung zur Qualitätsüberwachung für Bearbeitungseinrichtungen für Werkstücke (4), bestehend aus mindestens einem Manipulator (2), mindestens einem Werkzeug (3) und einer Steuerung (5,6,7) für den Manipulator (2) und die Applikation, wobei der Manipulator (2) das Werkzeug (3) nach einem vorgegebenen Applikationsprogramm entlang einer vorgegebenen Bahn führt, **dadurch gekennzeichnet, dass** die Überwachungseinrichtung (9) mindestens eine Meßeinrichtung (10), eine Speichereinrichtung (8) und eine Vergleichseinrichtung aufweist, wobei die Überwachungseinrichtung (9) ein oder mehrere Applikations-Parameter (15) während des Bearbeitungs-Prozesses in Abhängigkeit von Weg oder von Weg und Zeit aufnimmt, speichert und vergleicht, wobei aus den bei ein oder mehreren Kalibriervorgängen gewonnenen Ist-Werten von ein oder mehreren Applikations-Parametern (15) der für gut befundenen Kalibrier-Werkstücke (4) von Weg oder von Weg und Zeit abhängige Soll-Werte (12,13,14) ermittelbar sind, wobei im Serienbetrieb die aufgenommenen Ist-Werte der Applikations-Parameter (15) mit den Soll-Werten (12,13,14) zur Überwachung der Prozeß- und Produktqualität verglichen werden.

8. Vorrichtung nach Anspruch 7, **dadurch gekennzeichnet, dass** die Überwachungseinrichtung (9) mit der Manipulatorsteuerung (6) und der Applikationssteuerung (7) der Bearbeitungseinrichtung (1) verbunden ist.

9. Vorrichtung nach Anspruch 7 oder 8, **dadurch gekennzeichnet, dass** die Überwachungseinrichtung (9) eine Anzeige (11) aufweist.

10. Vorrichtung nach Anspruch 7, 8 oder 9, **dadurch gekennzeichnet, dass** der Manipulator (2) als mehrachsiger Industrieroboter ausgebildet ist.

11. Vorrichtung nach einem der Ansprüche 7 bis 10, **dadurch gekennzeichnet, dass** die Meßeinrichtung(en) (10) am Werkzeug (3) angeordnet ist/sind.

12. Vorrichtung nach einem der Ansprüche 7 bis 11, **dadurch gekennzeichnet, dass** die Meßeinrichtung (10) die Applikations-Parameter (15) als Ist-Werte aufnimmt.

13. Vorrichtung nach einem der Ansprüche 7 bis 12, **dadurch gekennzeichnet, dass** die Überwachungseinrichtung (9) eine rechnergestützte Vergleichseinrichtung mit einer Integriereinheit und/oder einer Filtereinheit aufweist.

14. Vorrichtung nach einem der Ansprüche 7 bis 13, **dadurch gekennzeichnet, dass** die Überwachungseinrichtung (9) mit einer Regeleinrichtung verbunden ist.

15. Vorrichtung nach einem der Ansprüche 7 bis 14, **dadurch gekennzeichnet, dass** die Überwachungseinrichtung (9) eine Kalibrierschaltung aufweist.

## Claims

1. Method for quality control during the machining of workpieces (4), the machining being carried out by a manipulator (2) comprising at least one tool (3) and a controller (5, 6, 7) for the manipulator and the application, and the manipulator (2) guiding the tool (3) along a predefined path in accordance with a predefined application program, **characterized in that**, in one or more calibration operations, at least one workpiece (4) is machined as a sample, the actual values of one or more application parameters (15) being recorded as a function of the path or of the path and time by a monitoring device (9) and being stored, after which the quality of the machined workpiece or workpieces (4) is checked and path-dependent or path- and time dependent desired values (12, 13, 14) are determined from the actual values for calibration workpieces (4) which are found to be good, with which values, in subsequent mass-production operation, the process and product quality is monitored by comparing the actual values recorded in mass-production operation with the desired values (12, 13, 14).

2. Method according to Claim 1, **characterized in that** the actual values and the desired values (12, 13, 14) are recorded and stored as path-dependent or path- and time dependent instantaneous value curves.

3. Method according to Claim 1 or 2, **characterized in that** the application parameters (15) recorded in the calibration operation and in mass-production operation are integrated with fixed integration times or filtered in a corresponding way.

4. Method according to one of Claims 1 to 3, **characterized in that** the polling cycle rate during quality control is variable and is matched to the application, in particular in critical areas.

5. Method according to one of Claims 1 to 4, **characterized in that** the actual/desired value comparison and the quality control are carried out on line.

6. Method according to one of Claims 1 to 5, **characterized in that** the calibration is carried out automatically using a calibration circuit in the monitoring device (9).

7. Device for quality control during the machining of workpieces (4), comprising at least one manipulator (2), at least one tool (3) and a controller (5, 6, 7) for the manipulator (2) and the application, and the manipulator (2) guiding the tool (3) along a predefined path in accordance with a predefined application program, **characterized in that** the monitoring device (9) comprises at least one measuring device (10), a storage device (8) and a comparison device, the monitoring device (9) recording one or more application parameters (15) as a function of the path or of the path and time during the machining process, storing and comparing them, it being possible, from the actual values of one or more application parameters (15) obtained during one or more calibration operations, for path-dependent or path- and time-dependent desired values (12, 13, 14) to be derived for calibration workpieces (4) that are found to be good, in mass-production operation the recorded actual values of the application parameters (15) being compared with the desired values (12, 13, 14) in order to monitor the process and product quality.

8. Device according to Claim 7, **characterized in that** the monitoring device (9) is connected to the manipulator controller (6) and the application controller (7) of the machining device (1).

9. Device according to Claim 7 or 8, **characterized in that** the monitoring device (9) has a display (11).

10. Device according to Claim 7, 8 or 9, **characterized in that** the manipulator (2) is constructed as a multi-axis industrial robot.

11. Device according to one of Claims 7 to 10, **characterized in that** the measuring device(s) (10) is/are arranged on the tool (3).

12. Device according to one of Claims 7 to 11, **characterized in that** the measuring device (10) records the application parameters (15) as actual values.

13. Device according to one of Claims 7 to 12, **characterized in that** the monitoring device (9) has a computer-aided comparison device with an integrating unit and/or a filtering unit.

14. Device according to one of Claims 7 to 13, **characterized in that** the monitoring device (9) is connected to a control device.

15. Device according to one of Claims 7 to 14, **characterized in that** the monitoring device (9) has a calibration circuit.

## Revendications

1. Procédé pour le contrôle qualité pendant l'usinage de pièces d'oeuvre (4), l'usinage étant exécuté par un manipulateur (2) avec au moins un outil (3) et une commande (5, 6, 7) pour le manipulateur et l'application, et le manipulateur (2) guidant l'outil (3) le long d'une trajectoire prédéterminée d'après un programme d'application prédéterminé, **caractérisé en ce qu'**au moins une pièce d'oeuvre (4) est usinée à titre d'essai dans un ou plusieurs processus d'étalonnage, les valeurs réelles étant enregistrées et mémorisées en fonction du tracé ou du tracé et du temps par un ou plusieurs paramètres d'application (15) avec un dispositif de contrôle (9), d'après lesquelles la qualité du ou des pièces d'oeuvre usinées (4) est contrôlée et des valeurs de consigne (12, 13, 14) dépendant du tracé ou du tracé et du temps sont déterminées à partir des valeurs réelles des pièces d'oeuvre (4) d'étalonnage, considérées comme bonnes, avec lesquelles valeurs dans la production en série subséquente, la qualité du processus et du produit est contrôlée, en comparant les valeurs réelles enregistrées dans la production en série, avec les valeurs de consigne (12, 13, 14).

2. Procédé selon la revendication 1, **caractérisé en ce que** les valeurs réelles et les valeurs de consigne (12, 13, 14) sont enregistrées et mémorisées sous la forme de variations de la valeur momentanée dépendant du tracé ou du tracé et du temps.

3. Procédé selon la revendication 1 ou 2, **caractérisé en ce que** les paramètres d'application (15) enregistrés pendant l'étalonnage et la production en série sont intégrés avec des durées d'intégration fixes, ou filtrés de manière appropriée.

4. Procédé selon l'une quelconque des revendications 1 à 3, **caractérisé en ce que** la cadence d'interrogation lors du contrôle qualité est variable, et est adaptée à l'application, en particulier dans les zones critiques.

5. Procédé selon l'une quelconque des revendications 1 à 4, **caractérisé en ce que** la comparaison des valeurs réelles/valeurs de consigne et le contrôle qualité sont réalisés en ligne.

6. Procédé selon l'une quelconque des revendications 1 à 5, **caractérisé en ce que** l'étalonnage est réalisé automatiquement avec un circuit d'étalonnage dans le dispositif de contrôle (9).

7. Appareil pour le contrôle qualité destiné aux dispositifs d'usinage pour pièces d'oeuvre (4), se composant d'au moins un manipulateur (2), d'au moins un outil (3) et d'une commande (5, 6, 7) pour le manipulateur (2) et l'application, le manipulateur (2) guidant l'outil (3) le long d'une trajectoire prédéterminée, d'après un programme d'application prédéterminé, **caractérisé en ce que** le dispositif de contrôle (9) présente au moins un dispositif de mesure (10), un dispositif à mémoire (8) et un dispositif comparateur, le dispositif de contrôle (9) enregistrant, mémorisant, et comparant un ou plusieurs paramètres d'application (15) en fonction du tracé ou du tracé et du temps pendant le processus d'usinage, où des valeurs de consigne dépendant du tracé ou du tracé et du temps (12, 13, 14) peuvent être déterminées à partir des valeurs réelles acquises pendant un ou plusieurs processus d'étalonnage de un ou plusieurs paramètres d'application (15) des pièces d'oeuvre (4) d'étalonnage considérées comme bonnes, les valeurs réelles enregistrées des paramètres d'application (15) étant comparées avec les valeurs de consigne (12, 13, 14) pendant la production en série, afin de contrôler la qualité du processus et du produit.

8. Appareil selon la revendication 7, **caractérisé en ce que** le dispositif de contrôle (9) est relié à la commande du manipulateur (6) et à la commande de l'application (7) du dispositif d'usinage (1).

9. Appareil selon la revendication 7 ou 8, **caractérisé en ce que** le dispositif de contrôle (9) présente un affichage (11).

10. Appareil selon la revendication 7, 8 ou 9, **caractérisé en ce que** le manipulateur (2) est formé en tant que robot industriel à plusieurs axes.

11. Appareil selon l'une quelconque des revendications 7 à 10, **caractérisé en ce que** le ou les dispositifs de mesure (10) sont disposés au niveau de l'outil (3).

12. Appareil selon l'une quelconque des revendications 7 à 11, **caractérisé en ce que** le dispositif de mesure (10) enregistre les paramètres d'application (15) sous forme de valeurs réelles.

13. Appareil selon l'une quelconque des revendications 7 à 12, **caractérisé en ce que** le dispositif de contrôle (9) présente un dispositif comparateur assisté par ordinateur ayant une unité d'intégration et/ou une unité de filtrage.

14. Appareil selon l'une quelconque des revendications 7 à 13, **caractérisé en ce que** le dispositif de contrôle (9) est lié à un dispositif de régulation.

15. Appareil selon l'une quelconque des revendications 7 à 14, **caractérisé en ce que** le dispositif de contrôle (9) présente un circuit d'étalonnage.
